# EUROPEAN PATENT APPLICATION

(11) **EP 0 962 193 A1**
(43) Date of publication of application: **08.12.1999**
(21) Application number: 99109315.4
(22) Date of filing: 28.05.1999
(51) Int. Cl.: A61C 7/10

(54) **Rapid palatal suture expander for orthodontic use**

(30) Priority: 02.06.1998 IT BO980347
(71) Applicant: Forni, Paolo, 40013 Castel Maggiore (Bologna) (IT)
(72) Inventor: Forni, Paolo, 40013 Castel Maggiore (Bologna) (IT)
(74) Representative: Modiano, Guido, Dr.-Ing.

(57) **Abstract**

A rapid palatal suture expander (1) for orthodontic use, comprising a front screw (2) and a rear screw (3) which are mutually parallel and are of the type with two starts wound in opposite directions, the screws being screwed into two respective pairs of bushes (4a, 4b, 5a, 5b) which are correspondingly threaded and are embedded, together with two metal wires (9, 10) which are curved in a substantially U-like shape and whose ends can be rigidly coupled by welding to bands for anchoring to teeth, at the front and at the rear, to two respective half-bodies, a right one (12) and a left one (11), the screwing or unscrewing of the screws being adapted to determine the mutual approach or spacing of the front or rear sides of the half-bodies.

## Description

The present invention relates to a rapid palatal suture expander for orthodontic use.

The treatment of severe cases of maxillary dental arch deficit currently uses palatal suture expanders for which the maximum relative spacing is achieved in less than ten days: conventional rapid expanders can be constituted, for example, by two symmetrical bodies, one of the ends of two metal wire arms being welded to each one of said bodies, said arms being meant to be shaped to fit and to have their other ends rigidly coupled to bands for anchoring to respective crowns of teeth: in one known embodiment, the two bodies have, at their ends, two pairs of holes for two mutually parallel sliding guiding stems; in a central position with respect to the two bodies there are two mutually aligned threaded holes, one having a right-handed thread and the other one having a left-handed thread, for the screwing of a two-start screw whose screwing or unscrewing is adapted to determine the mutual approach or spacing of the two bodies parallel to each other.

As mentioned, conventional rapid expanders allow a spacing of the bodies with respect to each other in a parallel condition: it has been observed that for particular disorders it can be advantageous to produce a greater divarication or opening between the two bodies toward the front or toward the rear.

Moreover, it has been noted that a slight play remains in the various positions assumed during the mutual spacing of the two bodies, which are usually made of a material such as steel.

The aim of the present invention is to obviate the above-cited drawbacks of conventional devices, i.e., to provide a rapid palatal suture expander for orthodontic use which allows to vary at will the front or rear divarication of the two bodies and does not have play between the bodies.

Within the scope of this aim, an object of the present invention is to provide a structure which is simple, relatively easy to provide in practice, safe in use, effective in operation and has a relatively low cost.

This aim and this object are achieved by the present rapid palatal suture expander for orthodontic use, characterized in that it is constituted by a front screw and a rear screw which are mutually parallel and are of the type with two starts wound in opposite directions, said screws being screwed into two respective pairs of bushes which are correspondingly threaded and are embedded, together with two metal wires which are curved in a substantially U-like shape and whose ends can be rigidly coupled by welding to bands for anchoring to teeth, at the front and at the rear, to two respective half-bodies, a right one and a left one, the screwing or unscrewing of said screws being adapted to determine the mutual approach or spacing of the front or rear sides of said half-bodies.

Further characteristics and advantages will become apparent from the detailed description of a preferred but not exclusive embodiment of a rapid palatal suture expander for orthodontic use according to the invention, illustrated only by way of non-limitative example in the accompanying drawings, wherein:

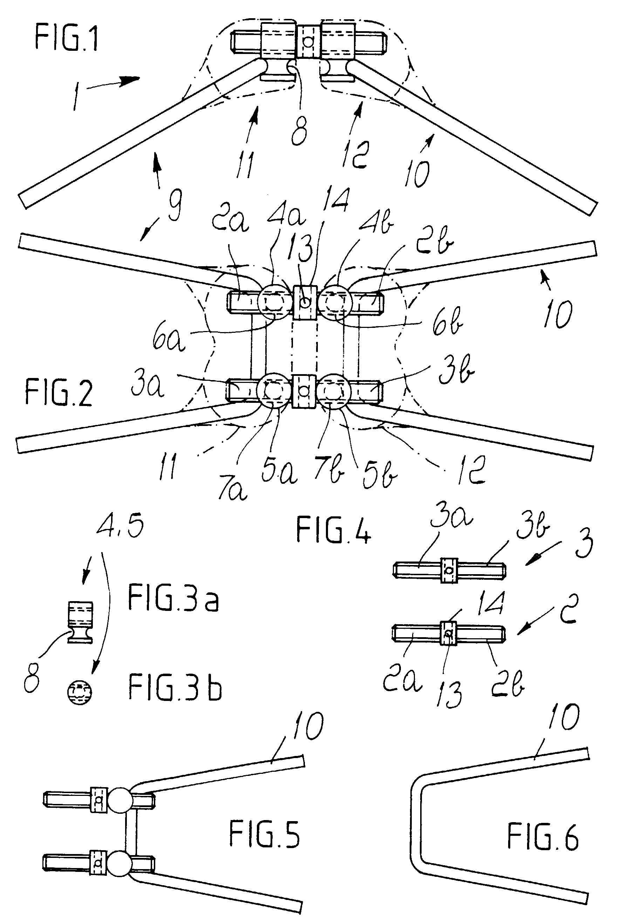

Figure 1 is a front view of a rapid palatal suture expander for orthodontic use;
Figure 2 is a plan view of a rapid palatal suture expander for orthodontic use;
Figures 3a and 3b are a side view and a plan view of a bush of the expander according to the invention;
Figure 4 is a plan view of the two two-start screws of the expander according to the invention;
Figure 5 is a plan view of the components of one part of the expander;
Figure 6 is a plan view of the components of a metallic wire of the expander which is curved in a U-like shape.

With particular reference to the above figures, the reference numeral 1 generally designates a rapid palatal suture expander for orthodontic use according to the invention.

The expander 1 is constituted by a front screw 2 and a rear screw 3 which are mutually parallel and are of the type in which the two ends 2a and 2b and 3a and 3b, respectively, are affected by the winding of two screw starts which wind in opposite right-handed and left-handed directions.

The two ends of the screws 2 and 3 are screwed into two respective pairs of bushes 4a and 4b, 5a and 5b which are diametrically crossed by corresponding holes 6a and 6b, 7a and 7b which are correspondingly threaded.

At the base, each one of the four bushes 4 and 5 is affected by an annular external groove 8.

The reference numerals 9 and 10 designate two metal wires which are curved substantially in the shape of a letter U with slightly diverging arms which can be shaped and cut to size according to requirements and whose ends can be rigidly coupled by welding to a tooth anchoring band, not shown in the figure.

The intermediate portions of the wires 9 and 10 rest against the corresponding grooves of the respective bushes 4a, 5a and 4b, 5b and are embedded, together with the bushes, to the front and to the rear of two respective half-bodies, a right one 12 and a left one 11; the screwing or unscrewing of the screws 2 and 3 can be performed by acting so as to tighten or loosen, at a diametrical hole 13, a median collar 14 of the screws by inserting an actuation stem; the rotary actuation of the stem in one direction or the other is suitable to produce the mutual approach or spacing of the front or rear sides of the half-bodies 11 and 12.

Advantageously, the right half-body 12 and the left half-body 11 are made of acrylic material and this avoids plays between the two ends of the screws 2 and 3 and the bushes 4a and 4b, 5a and 5b during mutual screwing or unscrewing: the half-bodies 11, 12 may in any case also be made of metal.

It has thus been shown that the invention achieves the intended aim and object, and in particular that a rapid palatal suture expander for orthodontic use is provided which allows to vary at will the front or rear divarication between the two bodies and has no play between said bodies and with the screws.

The invention thus conceived is susceptible of numerous modifications and variations, all of which are within the scope of the inventive concept.

All the details may also be replaced with other technically equivalent ones.

In practice, the materials employed, as well as the shapes and the dimensions, may be any according to requirements without thereby abandoning the scope of the protection of the appended claims.

The disclosures in Italian Patent Application No. BO98A000347 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A rapid palatal suture expander (1) for orthodontic use, characterized in that it comprises a front screw (2) and a rear screw (3) which are mutually parallel and are of the type with two starts wound in opposite directions, said screws being screwed into two respective pairs of bushes (4a, 4b, 5a, 5b) which are correspondingly threaded and are embedded, together with two metal wires (9, 10) which are curved in a substantially U-like shape and whose ends can be rigidly coupled by welding to bands for anchoring to teeth, at the front and at the rear, to two respective half-bodies, a right one (12) and a left one (11), the screwing or unscrewing of said screws being adapted to determine the mutual approach or spacing of the front or rear sides of said half-bodies.

2. The expander according to claim 1, characterized in that said two half-bodies are made of an acrylic material which is adapted to avoid plays between the two ends of the screws and the respective bushes.

3. The expander according to claim 1, characterized in that said two half-bodies are made of metallic material.
